# FASCICULE DE BREVET EUROPEEN

(11) **EP 0 520 915 B1**
(45) Date de publication et mention de la délivrance du brevet: **15.03.1995**
(21) Numéro de dépôt: 92420219.5
(22) Date de dépôt: 25.06.1992
(51) Int. Cl.: F16L 3/01, F16G 13/16

(54) **Dispositif limiteur d'amplitude du pivotement de deux organes articulés**
Vorrichtung zur Amplitudenbegrenzung der Schwenkbarkeit zweier gelenkig gelagerter Elemente
Device to limit the amplitude of the pivoting of two articulated elements

(30) Priorité: 26.06.1991 FR 9108181
(43) Date de publication de la demande: 30.12.1992
(73) Titulaire: DISTRIBUTIONS ETUDES CREATIONS REALISATIONS INDUSTRIELLES LYONNAISES DECRIL, 01700 Miribel (FR)
(72) Inventeur: Micheau, Philippe, F-69270 Fontaines Saint-Martin (FR); Petit, Philippe, F-69006 Lyon (FR); Thelier, Bernard, F-03700 Bellerive-Sur-Allier (FR)
(74) Mandataire: Monnier, Guy

(56) Documents cités:
- DE-U- 8 910 220
- DE-U- 8 913 176
- US-A- 4 590 961

## Description

La présente invention se réfère aux supports articulés pour les canalisations flexibles d'amenée de courant électrique ou de fluide sous pression des ensembles tels que les manipulateurs, robots, bras de manoeuvre et analogues.

On sait que les supports articulés du genre en question sont formés par un chaîne dont l'amplitude de rotation des maillons successifs doit être limitée en fonction des angles de travail envisagés.

Dans le document US-A-4 590 961 (SCHUMANN) on a décrit un support de ce type dans lequel chaque maillon comporte deux flasques longitudinaux dont les extrémités sont profilées pour s'assembler à pivotement avec les flasques correspondants des deux maillons adjacents. Les extrémités des flasques sont disposées côte à côte en chevauchement et elles sont reliées par un axe introduit dans des ouvertures prévues en coïncidence dans lesdites extrémités. En fait chaque axe est porté par un dispositif limiteur d'amplitude constitué par une plaque amovible qui est pourvue, disposées autour de l'axe précité, de parties en relief introduites avec jeu dans des lumières à profil arqué ménagées dans les extrémités des flasques.

Si un tel agencement permet bien de modifier l'amplitude du déplacement angulaire des maillons de la chaîne ou support moyennant remplacement par des plaques pourvues de parties en relief à profil différent, les résultats obtenus ne sont pas entièrement satisfaisants. Les plaques amovibles ne sont pas retenues angulairement sur les flasques des maillons, si bien que le déplacement de l'ensemble de la chaîne reste assez imprécis. Le support manque de rigidité et par ailleurs le remplacement des plaques implique nécessairement la disjonction momentannée des maillons puisque les axes de pivotement et d'assemblage sont portés par lesdites plaques.

C'est à ces inconvénients qu'entend remédier la présente invention, laquelle a pour objet le support articulé qui est défini à la revendication 1.

Le dessin annexé, donné à titre d'exemple, permettra de mieux comprendre l'invention, les caractéristiques qu'elle présente et les avantages qu'elle est susceptible de procurer :
Fig. 1 est une vue en perspective éclatée d'un des maillons d'un support articulé établi conformément à l'invention. On y a fait figurer en traits discontinus les extrémités d'un autre maillon semblable.
Fig. 2 est une coupe transversale partielle de l'articulation de deux maillons.
Fig. 3 est une coupe suivant III-III (fig. 2). On y a fait figurer en II-II le plan de coupe de fig. 2.
Fig. 4 est une vue semblable à celle de fig. 3, mais illustrant les deux maillons dans une position oblique l'un par rapport à l'autre.

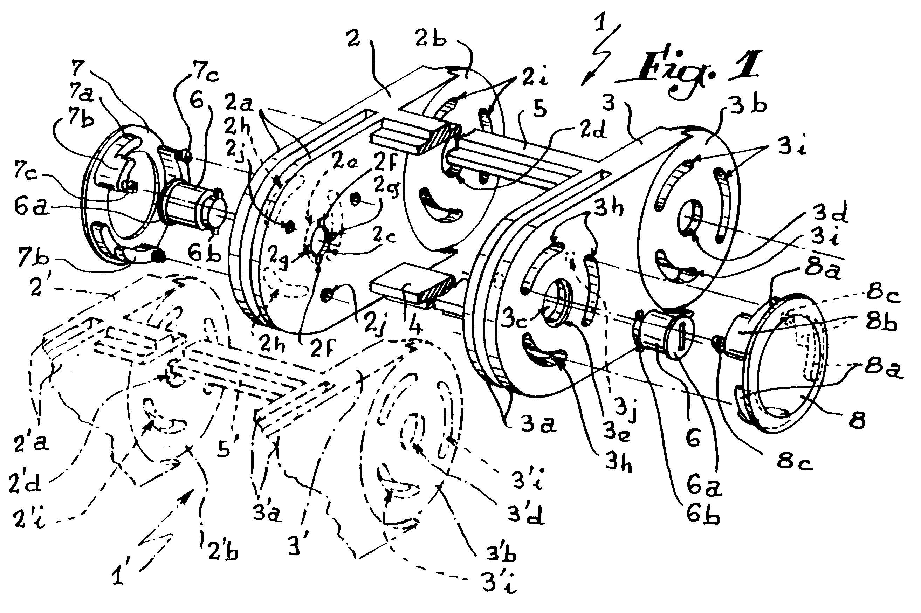

Chaque maillon 1 du support articulé comporte, comme illustré en fig. 1, deux flasques identiques 2, 3 symétriques par rapport au plan médian longitudinal dudit maillon 1. Les deux flasques sont réunis par des entretoises 4, 5 réalisées soit d'une pièce avec les maillons, soit au moyen de tirants indépendants. On observe que l'une des extrémités de chaque flasque comporte deux joues 2a, 3a à profil en arc-de-cercle déterminant entre elles un espace libre, tandis que l'autre extrémité est réalisée sous la forme d'un tenon 2b, 3b dont l'épaisseur correspond à l'écartement des joues de l'extrémité opposée de chaque flasque. Ainsi, un autre maillon 1′ schématisé en traits discontinus peut être assemblé au maillon 1 grâce à la pénétration des deux tenons 2′b, 3′b entre les joues 2a, 3a du maillon 1.

Chaque extrémité fourchue des flasques comporte un trou central 2c, 3c destiné à recevoir un axe indépendant 6 qui traverse aussi des trous de même diamètre 2d, 3d ménagés dans les tenons 2b, 3b. Ainsi, lorsque ces derniers sont engagés entre les joues d'un autre maillon, les deux maillons sont articulés l'un par rapport à l'autre dans un mouvement de pivotement autour de leurs axes 6. On observe que chaque trou 2c, 3c est à deux diamètres, la partie à plus grand diamètre 2e, 3e étant réalisée dans la joue extérieure de chaque flasque 2 et 3.

Chaque axe 6 comporte à l'une de ses extrémités une tête 6a qui vient se noyer dans la partie à grand diamètre 2e, 3e de chacun des trous 2c, 3c.

Son extrémité opposée est réduite et comprend une baïonnette 6b qui traverse deux encoches 2f, 3f, ménagées dans la joue intérieure de chaque extrémité fourchue des flasques 2 et 3. Deux autres encoches diamétralement opposées 2g, 3g, reçoivent la baïonnette après rotation de l'axe 6 dans le trou avec lequel il coopère.

On observe que les joues extérieures ainsi que les tenons 2b, 3b comportent trois lumières arquées 2h - 2i, 3h - 3i disposées concentriquement à leurs trous respectifs, et de même longueur, situées à 180° les unes par rapport aux autres. L'orientation des lumières est la même aux deux extrémités de chaque maillon.

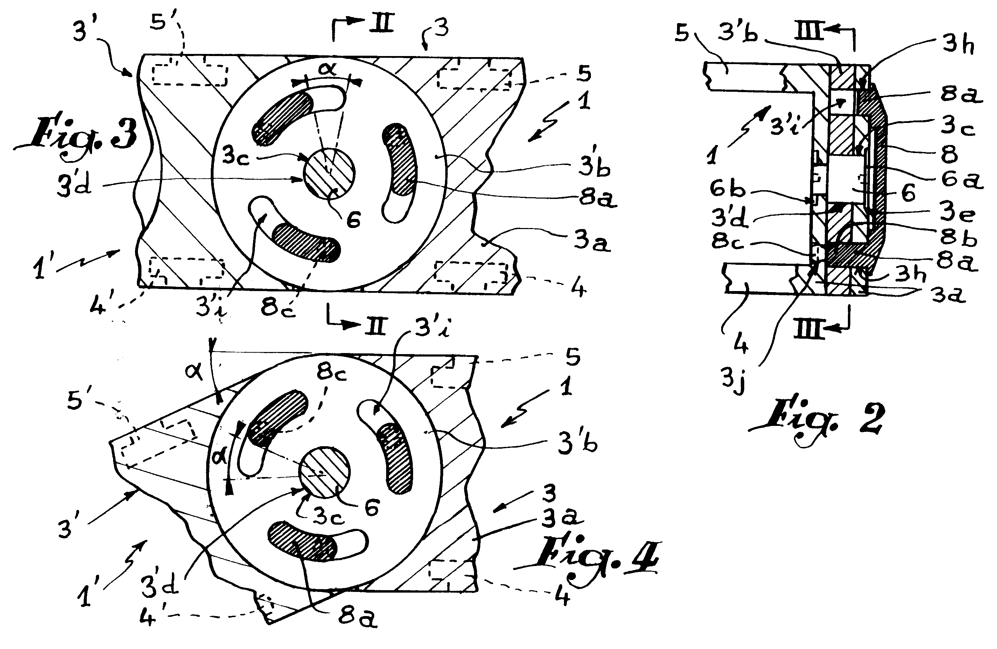

Pour limiter l'amplitude du déplacement angulaire des maillons, on a recours à des plaques circulaires 7, 8 dont la face intérieure comprend trois bossages arqués 7a, 8a disposés de manière strictement identique à celle des lumières de chaque joue extérieure et du tenon des deux flasques 2 et 3. L'épaisseur des bossages est égale à celle des joues extérieures des flasques, de telle sorte qu'ils occupent très exactement les lumières ménagées dans celles-ci. Chaque bossage se prolonge par une nervure plus courte 7b, 8b qui s'engage dans chaque lumière 2i, 3i du tenon d'un maillon voisin (fig. 2 et 3). Chacune des nervures comporte encore un téton 7c, 8c, qui présente la forme d'un harpon et qui s'engage dans trois trous 2j, 3j à deux diamètres réalisés dans les joues intérieures des extrémités fourchues de chaque maillon. De cette manière, chaque plaque 7, 8 est maintenue par encliquetage par rapport au flasque correspondant de chaque maillon.

Le fonctionnement est le suivant : Comme illustré en fig. 2, chaque plaque 7, 8 est immobilisée en rotation par rapport à l'extrémité fourchue du flasque correspondant du maillon. Les bossages arqués 7a, 8a, s'engagent à frottement doux dans les lumières correspondantes 2h, 3h des joues extérieures des flasques 2 et 3, tandis que les tétons 7c, 8c de chaque plaque 7, 8 s'encliquètent dans les trous correspondants, comme décrit plus haut. Par contre, les nervures 7b, 8b des plaques 7, 8 n'occupent pas toute la surface des lumières du tenon du maillon adjacent 1′, de telle sorte que lorsque les deux maillons sont dans le prolongement l'un de l'autre, l'espace libre correspond à un angle α. Lorsque les maillons pivotent l'un par rapport à l'autre, leur pivotement est limité par la valeur dudit angle, les extrémités des nervures des plaques parcourant les espaces libres précités pour venir en butée contre le fond des lumières, comme illustré en fig. 4 en ce qui concerne la plaque 8.

Bien entendu, lorsque le pivotement des maillons les uns par rapport aux autres doit être différent de celui α , il suffit d'échanger les plaques contre d'autres dont la longueur des nervures est différente.

On a ainsi réalisé un dispositif limiteur d'amplitude qui est de réalisation très simple puisque tous ses éléments peuvent être moulés en matière plastique et dont le fonctionnement est très sûr. On observera que le support articulé présente une rigidité parfaite par suite de la solidarisation efficace des plaques 7, 8 et des maillons 1, 1′ . Le déplacement de l'ensemble des maillons du support comporte une précision absolue qui évite tout effort déformant au niveau des canalisations flexibles supportées par la chaîne.

## Revendications

1. Support articulé pour canalisations flexibles d'alimentation, du genre constitué par une chaîne dont chaque maillon (1) comporte deux flasques longitudinaux (2, 3) conformés pour être assemblés par un axe de rotation (6) aux flasques d'un maillon adjacent (1'), tandis qu'il est prévu, au niveau de chaque axe (6), un dispositif de limitation angulaire formé par une plaque latérale amovible (7, 8) pourvue de parties en relief introduites avec jeu dans des lumières arquées pratiquées dans les flasques des maillons, caractérisé en ce que l'une des extrémités de chacun des flasques (2, 3) est prévue en forme de fourche afin de définir deux joues parallèles (2a, 3a) entre lesquelles vient s'engager l'extrémité opposée (2b, 3b) en forme de tenon du maillon adjacent (1'), tandis que chaque partie en relief de chacune des plaques (7, 8) du dispositif de limitation angulaire présente, décalés parallèlement à l'axe de rotation (6), de l'extérieur vers l'intérieur :
- un bossage arqué (7a, 8a) qui occupe toute la surface de la lumière arquée (2h, 3h) ménagée dans la joue (2a, 3a) tournée vers l'extérieur, afin de bloquer angulairement la plaque envisagée et de rigidifier ainsi la chaîne,
- une nervure (7b, 8b) qui n'occupe qu'une partie seulement des lumières arquées (2i, 3i) pratiquées dans le tenon (2b, 3b) pour limiter l'amplitude de rotation des maillons,
- et un téton d'extrémité (7c, 8c) apte à se clipser dans un trou (2j, 3j) de la joue intérieure en vue d'assurer la retenue en place de la plaque (7, 8) et de raidir l'ensemble.

2. Support suivant la revendication 1, caractérisé en ce que l'axe de rotation (6) est indépendant de la plaque (7, 8) correspondante et est retenu axialement en place par clipsage de son extrémité dans un trou (2c, 3c) prévu dans le tenon (2b, 3b) du flasque envisagé.

## Claims

1. Articulated support for flexible supply ducts, of the type formed by a chain of which each link (1) comprises two longitudinal webs (2, 3) shaped to be fitted by a rotary spindle (6) to the webs of an adjacent link (1'), while an angular limiting device is provided on a level with each spindle (6), said device being formed by a detachable lateral plate (7, 8) provided with raised portions which are inserted with some clearance into the curved apertures provided in the webs of the links, characterised in that one of the ends of each of the webs (2, 3) has a bifurcated configuration in order to define two parallel flanges (2a, 3a) between which the opposite tenon-shaped end (2b, 3b) of the adjacent link (1') engages, while each raised portion of each of the plates (7, 8) of the angular limiting device has, offset parallel to the rotary spindle (6), from the outside to the inside:
- a curved boss (7a, 8a) which occupies the whole surface of the curved aperture (2h, 3h) provided in the outwardly turned flange (2a, 3a), in order to block the intended plate angularly and hence render the chain rigid;
- a rib (7b, 8b) which only occupies one single portion of the curved apertures (2i, 3i) provided in the tenon (2b, 3b), in order to limit the rotary amplitude of the links;
- and an end teat (7c, 8c) which is capable of being clipped into a hole (2i, 3i) in the internal flange, in order to ensure that the plate (7, 8) is held in place and to render the assembly rigid.

2. Support according to claim 1, characterised in that the rotary spindle (6) is independent of the corresponding plate (7, 8) and is held in place axially by its end being clipped into a hole (2c, 3c) provided in the tenon (2b, 3b) of the intended flange.

## Patentansprüche

1. Gelenkige Abstützung für flexible Versorgungsleitungen, bestehend aus einer Kette, bei der jedes Kettenglied (1) Zwei Längsflansche (2,3) umfaßt, die derart ausgebildet sind, daß sie über eine Drehachse (6) mit den Flanschen eines benachbarten Kettengliedes (1') zusammengesetzt werden, während in der Höhe jeder Achse (6) eine als lösbare Seitenplatte (7,8) ausgebildete Winkelbegrenzungsvorrichtung vorgesehen ist, die mit vorspringenden Teilen versehen ist, die mit Spiel in in den Flanschen der Kettenglieder angeordnete bogenförmige Öffnungen eingesetzt sind,
**dadurch gekennzeichnet,**
daß ein Ende jedes Flansches (2,3) gabelförmig ausgebildet ist, um zwei parallele Wangen (2a,3a) zu bilden, zwischen die das entgegengesetzte Ende (2b,3b) des benachbarten Kettengliedes (1') in Form eines Mitnehmers greift, während jedes vorspringende Teil jeder Platte (7,8) der Winkelbegrenzungsvorrichtung, parallel versetzt zur Drehachse, von außen nach innen umfaßt:
- einen bogenförmigen Vorsprung (7a,8a), der die gesamte Fläche der in der nach außen gerichteten Wange (2a,3a) angeordneten bogenförmigen Öffnung (2h,3h) einnimmt, um winkelmäßig die betrachtete Platte zu blockieren und so die Kette zu versteifen,
- eine Rippe (7b,8b), die nur einen Teil von mit dem Mitnehmer (2b,3b) ausgebildeten bogenförmigen Öffnungen (2i,3i) einnehmen, um die Rotationsamplitude der Kettenglieder zu begrenzen,
- und einen Ansatz (7c,8c) am Ende, der in ein Loch (2j,3j) der inneren Wange einrasten kann, um sicherzustellen, daß die Platte (7,8) in Stellung gehalten wird, und die Gesamtheit zu versteifen.

2. Abstützung nach Anspruch 1, dadurch gekennzeichnet, daß die Drehachse (6) unabhängig von der entsprechenden Platte (7,8) ist und axial durch Einklinken seines Endes in ein in dem Mitnehmer (2b,3b) des betrachteten Flansches vorgesehenes Loch (2c,3c) in Stellung gehalten wird.
